# EUROPEAN PATENT SPECIFICATION

(11) **EP 2 592 364 B1**
(45) Date of publication and mention of the grant of the patent: **08.01.2014**
(21) Application number: 11425274.5
(22) Date of filing: 14.11.2011
(51) Int. Cl.: F24J 2/52, F24J 2/46, F24J 2/04, H01L 31/042, H01L 31/048

(54) **An integrated structural system for mounting of photovoltaic panels**
Integriertes Struktursystem zur Montage von photovoltaischen Kollektoren
Système structurel intégré pour assembler des panneaux photovoltaïques

(43) Date of publication of application: 15.05.2013
(73) Proprietor: D.Motica S.R.L., 60035 Jesi (AN) (IT)
(72) Inventor: Ceccarelli, Lorenzo, 60018 Montemarciano (AN) (IT)
(74) Representative: Baldi, Claudio

(56) References cited:
- EP-A1- 2 023 402
- EP-A1- 2 295 893
- FR-A1- 2 940 664
- FR-A1- 2 958 381
- NL-C2- 1 006 490
- US-A1- 2009 087 255
- BOPP ET AL: "Lessons learnt during the realization of 30 photovoltaic systems for remote houses", PROCEEDINGS OF THE EUROPEAN PHOTOVOLTAIC SOLAR ENERGY CONFERENCE, XX, XX, 11 April 1994 (1994-04-11), pages 1100-1103, XP002110483,

## Description

The present patent application relates to a mounting system of photovoltaic panels such to obtain a watertight covering on roofs of buildings, of integrated self-bearing type.

In the majority of cases, the photovoltaic market offers modules of standard photovoltaic panels, already provided with an aluminum frame that is adapted to increase sturdiness, but is insufficient to withstand the loads provided by the current regulations. Some manufacturers offer laminated modules without the aluminum frame, in such manner to create perimeter structures according to the project requirements.

Most current systems provide for fixing the photovoltaic components on an independent covering system. Some examples of known fixing systems of photovoltaic panels are:
- Tile fixing system. Such a system makes use of brackets fixed to a cement slab underneath the tiles. The bracket is shaped as a "C" to generate an anchoring seat for application of a track where photovoltaic panels are fixed by means of fixing means shaped as gull wings.
- Fixing system in replacement of tiles. Such a system provides for fixing tracks directly on the cement slab waterproofed with sheath or corrugated plate.
- Fixing system on industrial covering. Such a system provides for fixing tracks that support the photovoltaic panels directly on the corrugated plate of the covering.

The aforementioned systems of photovoltaic panels are characterized by simple installation, but are they impaired by the fact that they do not provide waterproofing for the roof. Consequently, said panels must be installed on perfectly waterproofed roofs, thus resulting in expensive waterproofing and, sometimes, excessively heavy roof. Moreover, given the fact that they change the profile of the building, said structures have a negative aesthetic impact on the building.

It must be noted that sections used to support photovoltaic panels that are currently available on the market have a rectangular tubular section, i.e. they have a panel support surface and continuous lateral shoulders with 50-60 mm width. Therefore, micro-infiltrations or water leaks percolate along the sides, with consequent dripping.

EP 2 295 893 discloses a modular system for fixing solar panels to a roof, including means for channeling water. The system comprises profiles supported on edges of water outlets and abutted against support tabs of solar panels of another set of profiles. EP 2 295 893 discloses an integrated structural system having the features of the preamble of claim 1.

The purpose of the present invention is to eliminate the drawbacks of the prior art, by devising a structural mounting system of photovoltaic panels, the surface of which, in addition to generate energy, is provided with the typical characteristics of a roofing, meaning waterproofing, statics and insulation.

Another purpose of the present invention is to provide a mounting system of photovoltaic panels that is versatile, practical, inexpensive and easy to make and install (system for façades or roofing's).

These purposes are achieved according to the invention, with characteristics claimed in the independent claim 1. Advantageous embodiments of the invention appear from the dependent claims.

The present invention originates from the idea of using the natural watertight capacity of photovoltaic surfaces (the exposed surface is made of tempered glass) to avoid laying another surface that acts as waterproof covering, in strict accordance with the rules for architectural integration.

The preliminary evaluations have ruled out the use of standard photovoltaic panels with false closing system of spaces between modules for the following reasons:
- in standard modules, the fixing of the laminated panel to the aluminum frame does not guarantee waterproofing over time, given the fact that, in the junction with aluminum, due to the stress caused by thermal expansion, and in spite of silicone sealing, conditions for infiltration are created;
- waterproofing of space between panels by means of gaskets applied on the edges and fixed with anchoring strips does not guarantee water tightness for the time period that is usually guaranteed by a standard covering (at least 30 years), given the fact that gaskets are exposed to external weather agents (sunlight, temperature range, etc.).

In view of the preliminary evaluations and with the object of developing a statically self-bearing system that is versatile, inexpensive, and simple, the final choice was to use:
1. laminated photovoltaic modules (without frame);
2. a structure to support the laminated panels, composed of two parts:
   - an upper watertight part comprising sections and gaskets, and
   - a lower support part, which is the bearing structure of the system and is composed of an infrastructure comprising special double-thickness sections. The upper support part is suitable for practically total water drainage. The lower infrastructure varies according to the type of covering and guarantees all possible variants for water tightness, fixing of photovoltaic part and necessary statics of most coverings. The lower infrastructure can be fixed to different types of coverings, such as for example: pitched roof with cement slab both in residential and industrial buildings; industrial shed roofs; roof with waterproof panels laid on metal or wooden structure; dome-shaped roof; roof on metal or wooden skeleton;
3. a double gasket system comprising:
   - a first layer of gaskets situated between sections of lower infrastructure and laminated photovoltaic modules; and
   - a second layer of gaskets situated between laminated photovoltaic modules and sections of upper support part.

Optionally, the mounting system of photovoltaic panels according to the invention may provide for:
4. use of a ridge and eaves system, directly fixed to bearing profiles, which allows for ventilation of part underneath the laminated photovoltaic module, to limit overheating of photovoltaic covering and increase waterproofing;
5. possibility of integrating the structure with a cooling system of photovoltaic modules by means of a forced ventilation system.

Further characteristics of the invention will appear clearer from the detailed description below, which refers to merely illustrative, not limitative, embodiments, illustrated in the attached drawings, wherein:
Fig. 1 is a top view of the mounting system of photovoltaic panels according to the invention;
Fig. 1 A is an enlarged view of the detail enclosed in circle A of Fig. 1.
Fig. 2 is a sectional view along sectional plane II-II of Fig. 1.
Fig. 3 is an exploded sectional view of the mounting system of Fig. 2, where two longitudinal strips and two longitudinal sections are omitted;
Fig. 4 is a partially sectional perspective view showing a portion of the mounting system according to the invention;
Fig. 5 is a sectional view showing a second embodiment of a lower section of the mounting system of the invention;
Fig. 6 is an exploded perspective view of the mounting system of four photovoltaic panels, where different types of gaskets have been used according to panel thickness;
Figs. 6A, 6B, 6C and 6D are three enlarged views of the details enclosed in circles A, B, C and D of Fig. 6.
Figs. 7 and 8 are two perspective views of the system of Fig. 6 in assembled condition;
Figs. 7A and 7B are two enlarged views of two details of Fig. 7.
Fig. 8 is a sectional view showing the fixing of upper strip to lower section and the fixing of two lower sections (longitudinal section and transversal section with different sections);
Fig. 9 is an exploded perspective view showing the connection between lower sections (longitudinal section and transversal section with identical section);
Fig. 10 is a sectional view showing the connection of lower sections of Fig. 9
Fig. 11 is a sectional view showing two metal flashings use to finish the covering of photovoltaic panels;
Fig. 12 is a detail of Fig. 11 disposed at the end of a roof with eaves;
Fig. 13 is a detail of Fig. 11 disposed in the ridge area of a roof.

Referring to the aforementioned figures, the mounting system of the invention is disclosed, generally indicated with numeral (1).

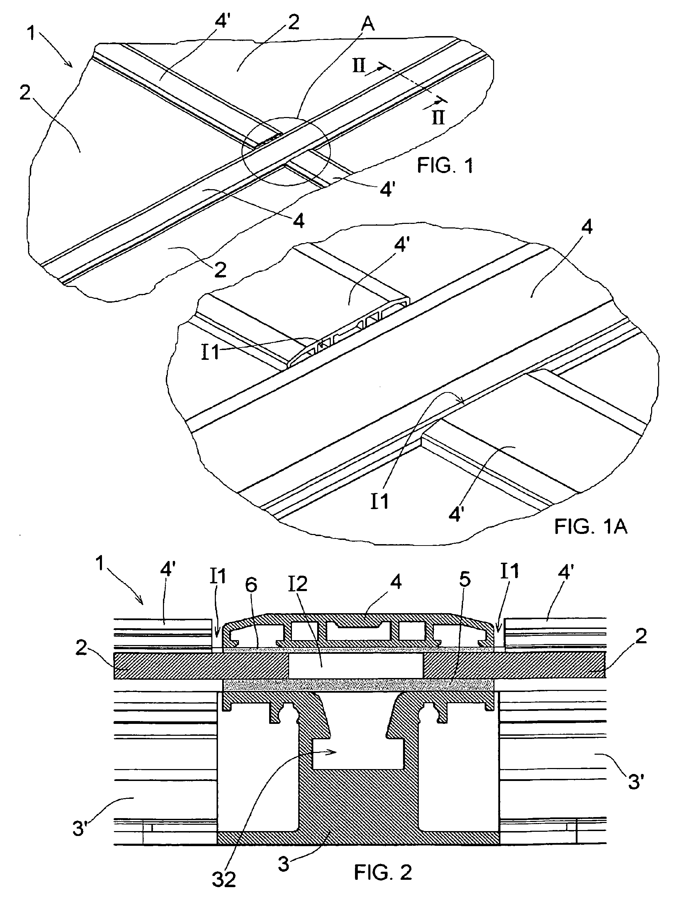

Now referring to Figs. 1 - 4, the mounting system (1) comprises a plurality of photovoltaic panels (2) that are firmly connected mutually. The photovoltaic panels (2) have a basically rectangular shape and are of laminated type, i.e. without aluminum frame along the perimeter edges.

The choice of laminated photovoltaic modules (2) is due to the following reasons:
- it solves the problem of watertight coupling between panel and frame;
- it adopts a more efficacious system for waterproofing function.

Another reason that has determined the choice of laminated modules is that it simplifies the realization of areas where elements that are different from photovoltaic modules must be inserted, such as skylights or service routes. As a matter of fact, in both cases, it is simply necessary to replace the photovoltaic module respectively with a glass plate or a galvanized plate with anti-slip surface, respecting the required thickness (5 mm) or with higher thickness.

The photovoltaic panels (2) are supported, in correspondence of the perimeter edges, by means of a lower support assembly (3, 3') and an upper support assembly (4, 4').

The lower support assembly comprises a plurality of lower transversal sections (3) in parallel arrangement and a plurality of lower longitudinal sections (3') in parallel arrangement and crossing the lower transversal sections (3) in such manner to form a plurality of rectangular frames, substantially having the same dimensions as the perimeter edges of each photovoltaic panel (2). The longitudinal sections (3') can have the same cross-section as the transversal sections (3). Sections (3, 3') are preferably made of suitable metal for structural application.

Likewise, the upper support assembly comprises a plurality of transversal sections (4) in parallel arrangement and a plurality of longitudinal sections (4') in parallel arrangement and crossing the transversal sections (4) in such manner to form a plurality of rectangular frames, substantially having the same dimensions as the perimeter edges of each photovoltaic panel (2). The longitudinal sections (4') have the same cross-section as the transversal strips (4). Sections (4, 4') are preferably made of weather-resistant metal, with specific surface treatment.

The lower support assembly (3, 3') is adapted to be fixed to the roof of the building, whereas the upper support assembly (4, 4') is adapted to be fixed to the lower support assembly (3, 3'). So, a lower section (3) and an upper section (4) close in sandwich-configuration the areas near the perimeter edges of two adjacent photovoltaic panels. Therefore, panels are firmly held together, in correspondence of the perimeter edges.

A lower gasket (5) is disposed on each lower section (3, 3') and under two adjacent photovoltaic panels (2), in the area near the edge of the panels. Likewise, an upper gasket (6) is disposed above two adjacent photovoltaic panels (2), in the area near the edge of the panels and under each upper section (4). Because of the presence of the two gaskets (5, 6), the coupling area between two adjacent photovoltaic panels is perfectly insulated. The lower gasket (5) and the upper gasket (6) can be shaped as rectangular frames with dimensions similar to the perimeter of the photovoltaic panels. Although Figs 2, 3 and 4 show only one upper gasket (6) disposed under each upper section (4), preferably two upper gaskets (6) can be disposed under one upper section (4).

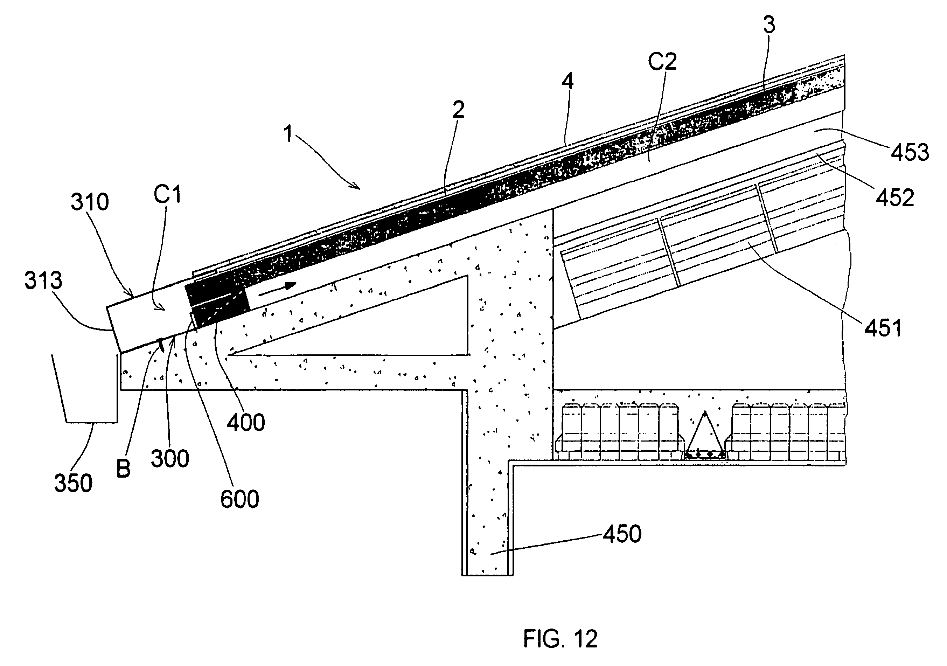

The lower gasket (5) can have a higher thickness than the upper gasket (6). In fact, the upper gasket (6) is responsible for first waterproofing and can be subjected to weather agents. Instead, the lower gasket (5) is protected against external agents and is shaped in such manner to create drainage channels for water that is not stopped by the barrier of the upper gasket (6). So, water is conveyed towards an eaves collection system, as described below, with reference to Fig. 12.

Referring to Fig. 2, the upper transversal sections (4') are situated in such manner to leave a gap (11) of about 5-6 millimeters in the junction with the upper longitudinal sections (4). This avoids water stagnation, especially in presence of coverings with low inclination and dirt that can impair the partial operation of the photovoltaic panels (2).

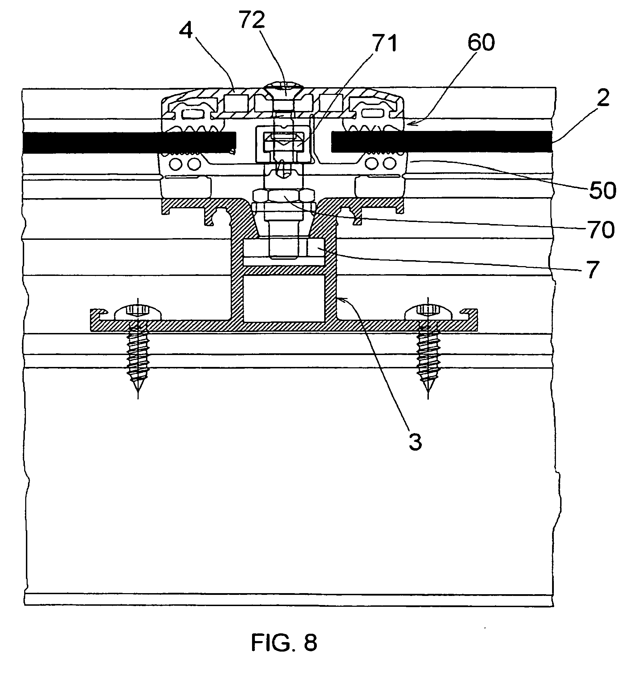

The photovoltaic panels (2) are mutually spaced in such manner to leave a gap (12) between the adjacent edges. The gap (12) is approximately 20 - 30 mm wide to allow for insertion of screw and bolt fixing means, as shown in Fig. 8.

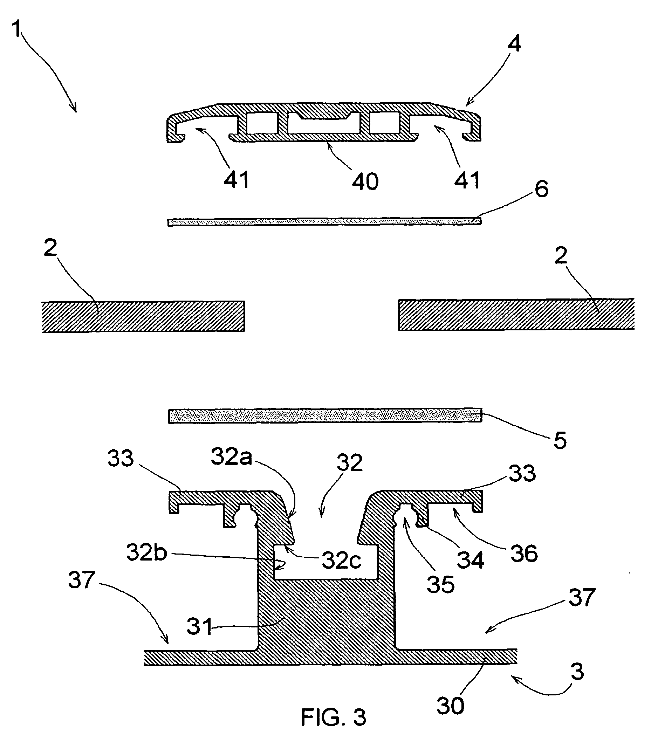

Referring to Fig. 3, each lower section (3) comprises a base (30) adapted to be laid on the roof of the building. A central body (32) protrudes from said base (30). Two wings (33) laterally protrude from the upper end of the central body, in such manner to offer a a flat support surface for the lower gasket (5). The wings (33) extend for the entire length of the section (3).

The base (30) has a higher width than the two wings (33) in such manner to define two lateral channels (37). The lower section (3) has a double width; for example, upper width of 50 mm to support photovoltaic panels and lower width of 80 mm to support the section. Such a difference generates two lateral channels (37) for double use:
- collection of micro percolated water;
- hidden passage of cables of photovoltaic panels.

The upper end of the central body (31) is provided with a groove (32) in central position extending for the entire length of the section (3). The groove (32) offers a housing for bolt means used to fix the upper section (4) to the lower section (3), as shown in Fig. 8.

The groove (32) has a tapered section (32a) with decreasing width from up down. The tapered section (32a) ends with a lower housing (32b) with larger width, which generates two undercut surfaces (32c). As shown in Fig. 8, the housing (32b) of the lower section receives a first support (7) where a bolt is screwed (70) on a support of insulated material (71) disposed between the panels (2). A screw (72) crosses the upper section (4) to be screwed to the body of the support (71).

Still referring to Fig. 3, a rib (34) protrudes in lower position from each wing (33) in such manner to generate a first housing (35) with rounded shape and a second housing (36) with overturned-U shape in the lower surface of each wing. The first housing (35) receives screws used to fix another lower section, forming eaves or finishing plates.

The upper section (4) has a substantially flat lower surface (40) in order to be stopped against the upper gasket (6). Two housings (41) shaped as overturned-C extend on the sides of the lower surface (40) of the strip to receive another type of gasket, as described below.

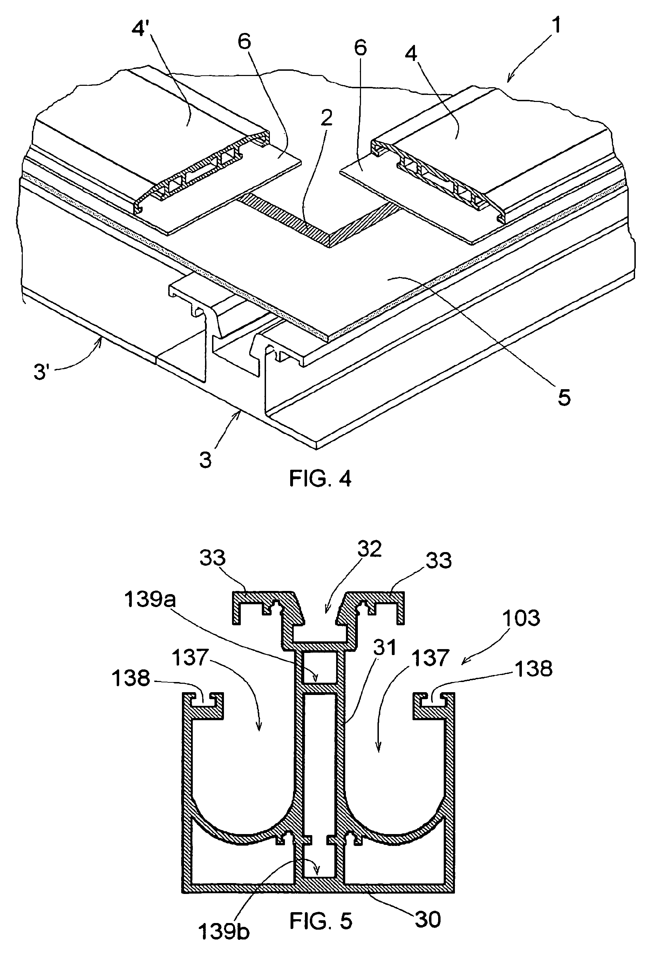

Fig. 5 shows a second embodiment of a lower section (103). The section (103) of the second embodiment has a central body (31) longer than the section (3) of the first embodiment. In such a case, two housings or lateral channels (137) are defined on the sides of the central body (32), being open on top and having a semi-cylindrical bottom to house cables of photovoltaic panels (2).

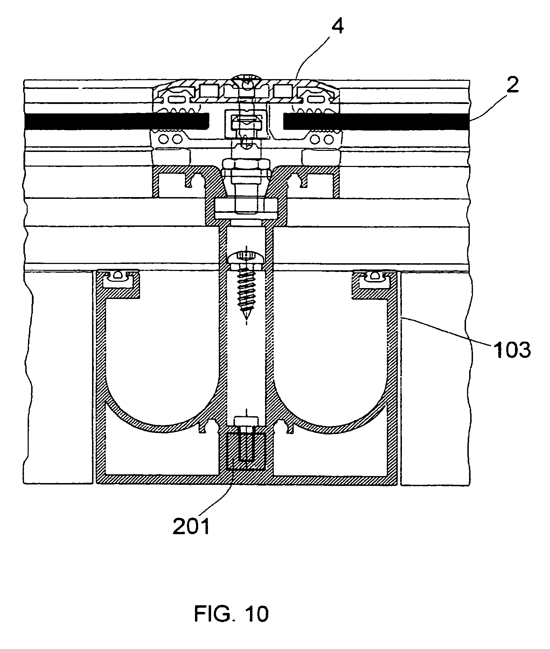

The section (103) also comprises two coupling seats (138) that are open on top and shaped as overturned-C, disposed on the sides of the housings (137). The coupling seats (138) are used to carry panels for insulation of covering and other sections. The body (31) is provided with an upper seat (139a) to receive fixing means of a transverse section with lower dimensions and a lower seat (139b) to receive connections, as shown in Fig. 10.

With such a type of section, aesthetics and functionality are managed at two levels, a dry level to receive the electrical cables of photovoltaic panels, and a second level for water drainage into the eaves.

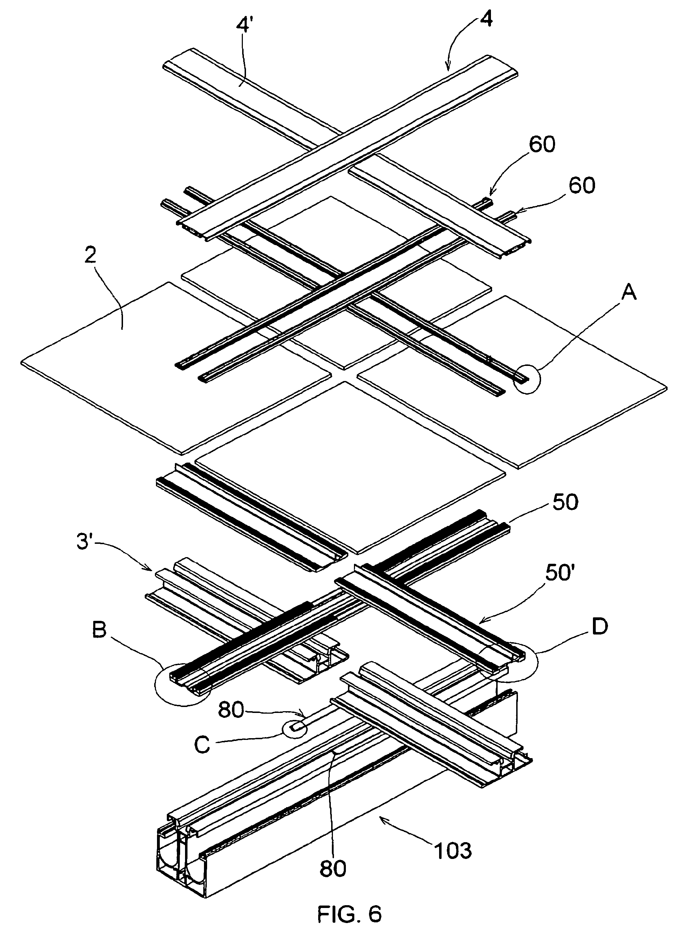

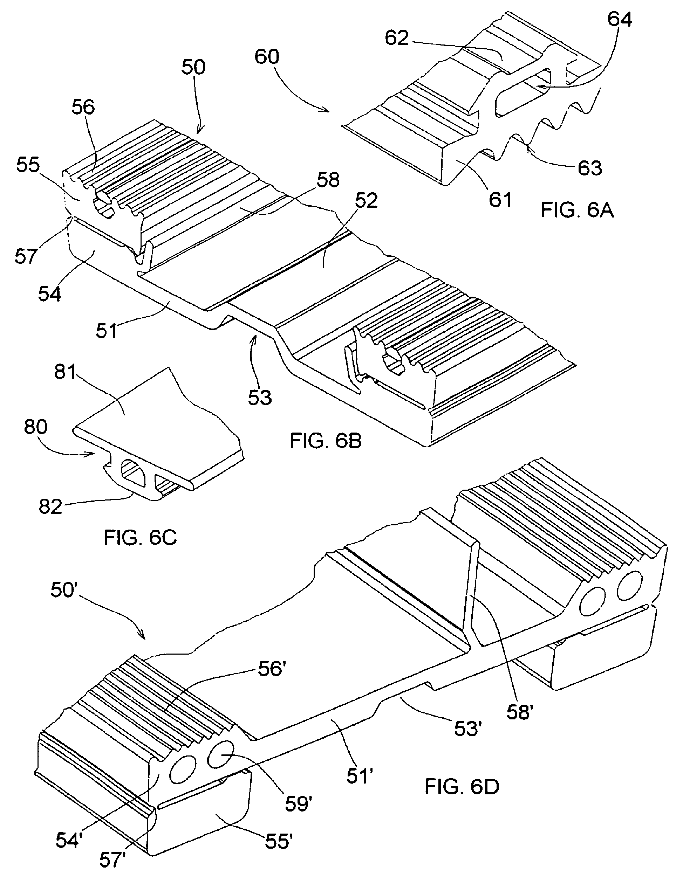

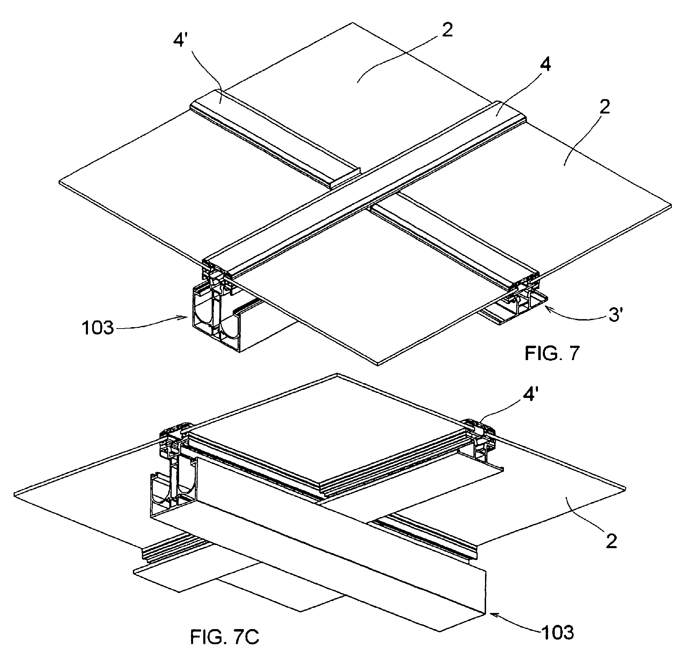

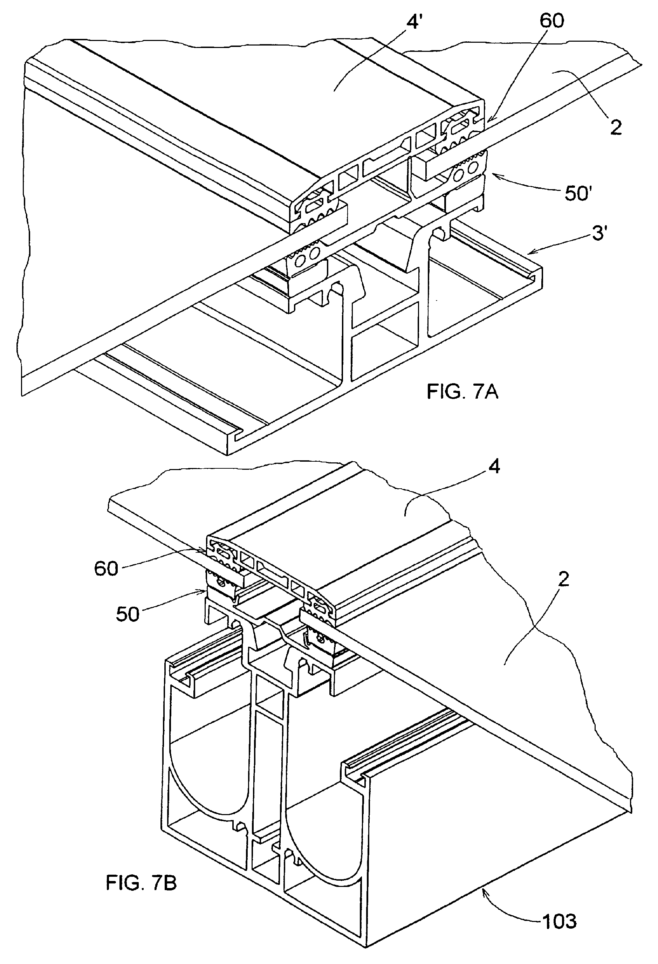

Figs. 6 to 8 show a connection system of four photovoltaic panels (2) that provides for different types of gaskets (50, 50', 60, 80) and the connection of one longitudinal section (103) with two transversal sections (3).

Referring to Fig. 6A, the set of upper gaskets provides for strip gasket (60) with width slightly higher than the C-shaped seats (41) of the upper section (4). Each gasket (60) comprises a strip (61) from which a fixing portion (62) protrudes upwards, being adapted to be engaged in the C-shaped slot (41) (Fig. 3) of the upper section. The strip (61) of the gasket has a lower surface (63) with sawtooth profile, in cross-section, in such manner to bite the surface of the photovoltaic panel. The fixing part (62) is shaped as "π" in cross-section, in such manner to define a hole (64) extending for the entire length of the gasket in order to make compression easier during mounting.

Referring to Fig. 6B, the lower gasket (50) comprises a plate (51) with same width as the width of the upper part of the lower section (103), which is identical to the width of the upper section (4). The plate (51) comprises a central portion (52) protruding upwards that defines a groove (53) on the lower surface and two lateral portions (54) with higher thickness. The central portion is adapted to be crossed by the screws used to fix the upper section to the lower section. Therefore, from such screws water can percolate on the central portion (52) that, because of its raised configuration, makes water flow into the lateral portions of the gasket, avoiding stagnation and corrosion of the underneath section.

The lateral portions (54) are provided with two folded gasket borders (55) connected by means of thinned material (57)to the external border of the lateral portions (54) in such manner to leave a gap between them. The gasket borders (55) have a sawtooth upper surface (56) that bites the lower surface of the photovoltaic panel. A upward rib (58) protrudes from the border facing the inside of each lateral portion (54). The rib (58) in vertical position is adapted, after gluing, to give continuity and act as plug so that water does not return to the horizontal transversal sections, sealing the head of the gaskets (Fig. 6D). The lower gasket (50) is designed for application in lower sections (3), the shape of which is adapted to drain water towards the eaves.

Referring to Fig. 6D, the second lower gasket (50') comprises a base (51') with same width as the upper part of the transversal section (3'), which is identical to the width of the upper section (4). The base (51') comprises a central groove (53') on the lower surface and two lateral portions (54') with higher thickness. The central portion is less thick than the two lateral portions because it is designed to be crossed by the screws used to fix the strip to the lower section. The lateral portions (54') have a lower sawtooth surface (56') to bite the lower surface of the photovoltaic panel. Holes (59') are obtained in the lateral portions (54'), extending for the entire length of the gasket. Under the lateral portions (54') two folded gasket borders (55') are provided and connected by means of thinned material (57') to the external border of the lateral portions (54') in such manner to leave a gap between them. An upward rib (58') protrudes from the base (51') of the gasket. The lower gasket (50') is provided for application in the transversal sections (3') inclined on covering, the shape of which is adapted to stop the water flow through the rib (58') and convey water towards the gaskets (50) that run laterally.

Referring to Fig. 6C, the gaskets (80) have the same length as the width of the transversal section (3'). Each gasket (80) is provided with a flat strip portion (81) from which a fixing portion (82) shaped as "π" in cross-section protrudes, being adapted to be snap-fitted into the C-shaped seats (138) (Fig. 5) of the section (103), in such manner to ensure seal in coupling between the two sections (103, 3'), avoiding unpleasant creaking due to expansion movements.

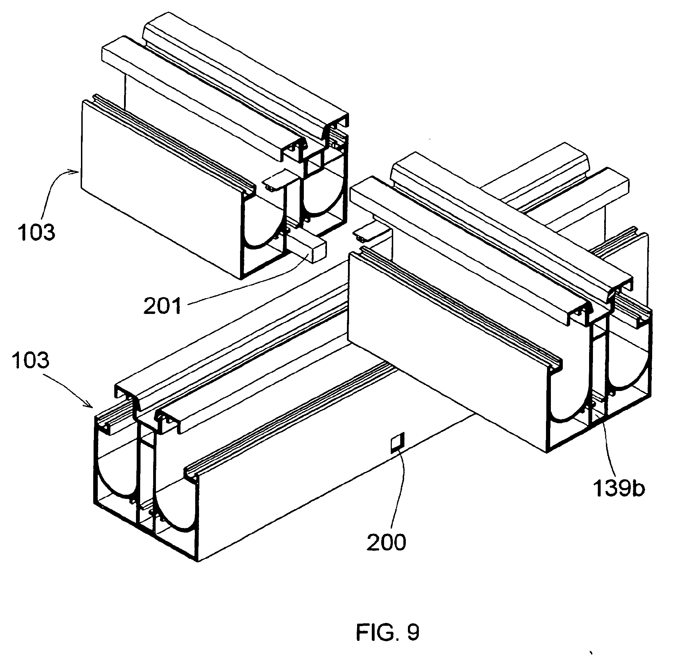

Figs. 9 and 10 illustrate the fixing system between two sections (103). In such a case, the longitudinal section (103) is provided with a transversal hole (200) with square section, which is crossed by a square-sectioned bar (201) that flows inside the lower hole (139) of the transversal sections (103).

It must be considered that photovoltaic panels (2) tend to reduce their performance when temperature increases; therefore, being mounted on a waterproof covering, they tend to overheat in presence of strong sunlight radiation. It is therefore preferable to provide a cooling system to cool them down.

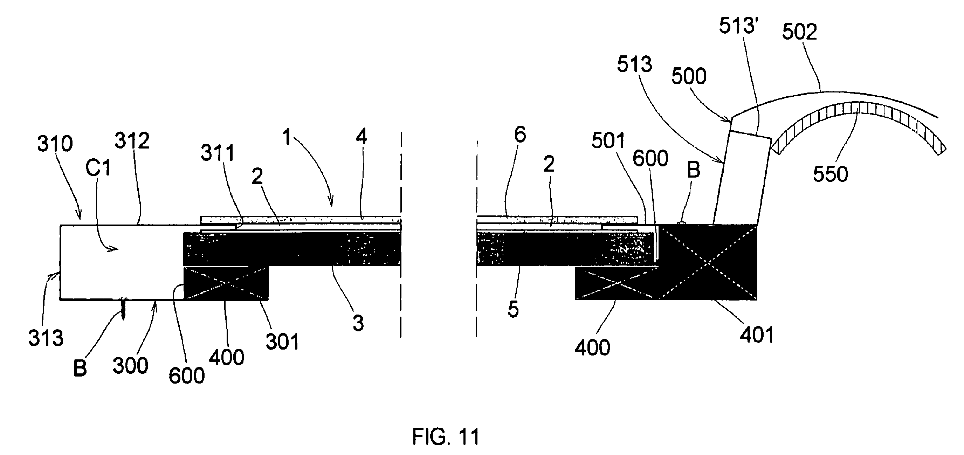

Fig. 11 illustrates a cooling system of photovoltaic panels (2). Spacers (400), such as wooden blocks, are disposed under the lower sections (3) in such manner to maintain photovoltaic panels (2) at a sufficient distance from the roof to be covered.

Metal flashings (380, 300, 500) are disposed at the ends of the photovoltaic panel covering.

The first flashing (300) is fixed to the roof with bolts (B) and is provided with end (301) disposed between spacer (400) and lower section (3).

The second flashing (310) is provided with end (311) disposed between lower section (3) and upper strip (4), a substantially horizontal side (312) where rainwater flows and a basically vertical grid (312) for inlet of cooling air for panels. The first flashing (300) and second flashing (310) generate a rectangular conduit (C1) for inlet of cooling air for photovoltaic panels.

The second flashing (500) is provided with first end (501) disposed between lower section (3) and upper strip (4) and second end (502) shaped as arc of circle to be disposed on a ridge tile (550). The flashing (500) is fixed by means of bolts (B) to a second type of spacer (401) that is higher than the first type of spacer (400) used to support the lower sections. In fact, the second spacer must have a surface higher than the height of the upper surface of the photovoltaic panels (2). Also the third flashing (500) is provided with grid (513) for inlet of air used to cool the photovoltaic panels. A second grid (513') is provided under the arched portion (502) of the third flashing.

An anti-bird net (600) is disposed around the spacers (400) that support the lower sections (3), allowing for passage of air, but not of animals, such as birds that may get inside the gap under the photovoltaic panels (2).

Fig. 12 shows a traditional roof comprising eaves strut (450), bricks (451), slab (452) and bed (453). In such a case the spacer (400) is disposed on the upper surface of the eaves strut (450) and the flashing (300) is fixed to the eaves strut (450) by means of bolts (B), in correspondence of eaves (350) in such manner that rainwater falling on the panels (2) is conveyed into the eaves (350).

If the eaves (350) already exists in the building, the flashing (310) can be fixed to the eaves (350). Alternatively, the eaves (350) can be made integral with the first flashing (300) or second flashing (310). Moreover, also the two flashings (300 and 310) can be made in a single piece, and possibly fixed and integrated in the uprights of the structure in suitable "screw seats" provided in the sections.

It must be noted that the wooden block (400) acts as spacer and maintains the lower sections (3) spaced from the bed (453) in such manner to define a ventilation gap (C2) in communication with the ventilation channels (C1) of the flashings.

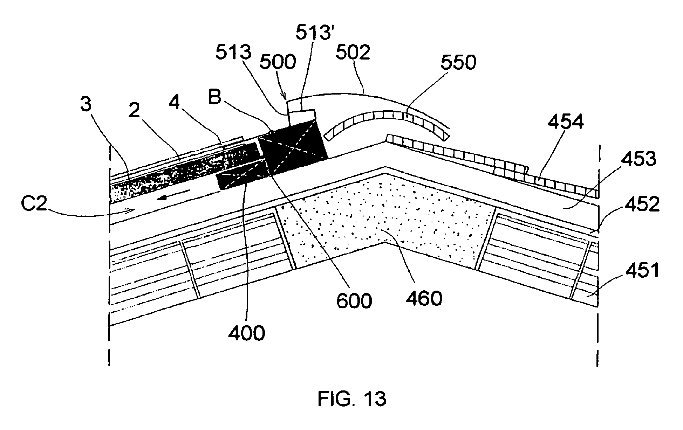

Fig. 13 shows the mounting of the photovoltaic panel covering in correspondence of a ridge beam (460). In such a case the arc of circle portion (502) of the flashing surmounts the ridge tiles (550) in such manner to drip water directly on the tiles (454) disposed on the bed (453) of the opposite side.

Numerous variations and modifications can be made to the present embodiments of the invention, within the reach of an expert, while still falling within the scope of the invention as illustrated in the enclosed claims.

## Claims

1. An integrated structural system (1) for mounting of photovoltaic panels in such manner to obtain a waterproof and watertight covering, comprising:
- a plurality of photovoltaic panels (2) with square, rectangular or also irregular shape;
- a plurality of lower metal sections (3, 3', 103) that are mutually crossed to generate support frames of the edges of the photovoltaic panels;
- a plurality of upper sections (4, 4') that are fixed to the lower metal sections by means of special supports and screws (70, 71, 72);
- a set of first and second lower gaskets (5; 50, 50') disposed between lower sections and lower surface of photovoltaic panels; and
- a set of upper gaskets (6; 60) disposed between upper surface of photovoltaic panels and upper section;
**characterized in that**
- said upper sections comprise longitudinal upper sections (4) and transversal upper sections (4') which are mutually crossed in correspondence of the lower metal sections (3, 3', 103), wherein the ends of the transversal upper sections (4') are spaced by the upper longitudinal sections (4) in such manner to generate gaps (11) for water drainage,
- said first lower gaskets (50) comprises a plate (51) with same width as the width of the upper part of the lower section (103), which is identical to the width of the upper sections (4, 4'),
- said second lower gaskets (50') comprises a base (51') with same width as the upper part of the transversal section (3'), which is identical to the width of the upper sections (4, 4'),
- the said first and second gaskets (50, 50') being disposed on each lower section (3, 3') and under two adjacent photovoltaic panels (2), in the area near the edge of the panels, to create drainage channels for water that is not stopped by a barrier of the said upper gaskets (6),
- the said first and second lower gaskets (50, 50') having lateral portions with higher thickness provided with serrated upper surface (56, 56') that is stopped against the lower surface of two adjacent photovoltaic panels (2).

2. A system (1) according to claim 1, **characterized by** the fact that said photovoltaic panels (2) are laminated panels without frame.

3. A system (1) according to claim 1 or 2, **characterized by** the fact that the edges of said photovoltaic panels (2) are spaced in such manner to leave a gap (12) for passage of screw means (70, 71, 72) to fix the upper strips to the lower sections.

4. A system (1) according to any one of the preceding claims, **characterized by** the fact that said upper sections (4, **4'**) comprise two lateral seats (41) with overturned-C shape in cross-section, which receive two upper strip gaskets (60) protruding in lower position with respect to the lower surface of the section.

5. A system (1) according to claim 4, **characterized by** the fact that said upper gasket (60) comprises a strip (61) with serrated lower surface (63) in contact with the upper surface of said photovoltaic panel (2) and a fixing portion (62) that is snap-fitted into said lateral seat (41) of the upper strip.

6. A system (1) according to any one of the preceding claims, **characterized by** the fact that said lower gaskets (50, 50') are provided with lateral edges (55, 55') connected to the base (51, 51') by means of thinned material (57, 57') and folded upwards or downwards to manage water.

7. A system (1) according to any one of the preceding claims, **characterized by** the fact that said lower sections (3; 103) comprise a central groove (32) open on top to receive fixings of lateral sections.

8. A system (1) according to any one of the preceding claims, **characterized by** the fact that said lower sections (103) have an upper surface (33) to support panels with width lower than a base (30) to support the section on the roof, in such manner to generate two lateral channels (137) open on top and having a semi-cylindrical bottom to house cables of photovoltaic panels (2).

9. A system (1) according to any one of the preceding claims, **characterized by** the fact that said lower sections (3, 3', 103) comprises two lateral seats (138) shaped as a C open upwards to receive gaskets (80) interposed between two crossing lower sections.

10. A system (1) according to any one of the preceding claims, **characterized by** the fact that said lower sections (3, 3', 103) comprise longitudinal square seats (139a, 139b) and transversal square holes to receive square bars (201) for cross-fixing of the lower sections (103).

11. A system (1) according to any one of the preceding claims, **characterized by** the fact that it comprises spacers (400) disposed between roof (453) and lower sections (3) in such manner to generate an air gap (C2) between roof (453) and photovoltaic panels (2) for ventilation and forced or natural cooling of photovoltaic panels.

12. A system (1) according to claim 11, **characterized by** the fact that said photovoltaic panel covering is provided, at least on one lateral border, with a metal flashing (300, 310) with end (311) disposed between said lower section (3) and upper strip (4), said flashing (300, 310) defining a rectangular channel (C1) in communication with said gap (C2) under the panels, said flashing (310) being provided with a grid (313) to let air inside channel (C1) and gap (C2) under panels for ventilation of photovoltaic panels.

13. A system (1) according to claim 12, **characterized by** the fact that it comprises an anti-bird net (600) disposed around said spacers (400), in such manner to separate said channel (C1) of flashing (300, 310) from gap (C2) under photovoltaic panels in order to avoid entrance of animals in the gap (C2) under photovoltaic panels.

## Patentansprüche

1. Tragsystem (1) für die Anbringung von Photovoltaikmodulen in der Weise, dass eine wasserundurchlässige, dichte Abdeckung erzielt wird, umfassend:
- eine Vielzahl von Photovoltaikmodulen (2) mit quadratischer, rechteckiger oder auch unregelmäßiger Form;
- eine Vielzahl von unteren Metallprofilen (3, 3', 103), die kreuzweise zueinander in der Weise angeordnet sind, dass Trägerrahmen für die Kanten der Photovoltaikmodule entstehen;
- eine Vielzahl von oberen Profilen (4, 4'), die an den unteren Metallprofilen mittels Spezialhalter und Schrauben (70, 71, 72) befestigt sind;
- eine Gruppe erster und zweiter unterer Dichtungen (5; 50, 50'), die zwischen den unteren Profilen und der unteren Fläche der Photovoltaikmodule angeordnet sind; und
- eine Gruppe von oberen Dichtungen (6; 60), die zwischen der oberen Fläche der Photovoltaikmodule und den oberen Leisten angeordnet sind;
**dadurch gekennzeichnet, dass**
- die oberen Profile obere Längsprofile (4) und obere Querprofile (4') umfassen, die kreuzweise zueinander an den unteren Metallprofilen (3, 3', 103) angeordnet sind, wobei die Enden der oberen Querprofile (4') von den oberen Längsprofilen (4) in der Weise beabstandet sind, dass Spalte (11) für den Abfluss des Wassers entstehen,
- die erste untere Dichtung (50) eine Platte (51) umfasst, deren Breite gleich breit wie die des unteren Profils (103) ist, welches dieselbe Breite wie das obere Profil (4, 4') besitzt,
- die zweite untere Dichtung (50') ein Untergestell (51') umfasst, dessen Breite gleich breit wie die des unteren Teils des Querprofils (3') ist, welches dieselbe Breite wie das obere Profil (4, 4') besitzt,
- wobei die erste und die zweite Dichtung (50, 50') auf jedem unteren Profil (3, 3') und unter zwei angrenzenden Photovoltaikmodulen (2) im Bereich nahe der Kante des Moduls angeordnet sind, um Dränagekanäle für das Wasser zu bilden, das nicht durch die Sperre der oberen Dichtungen (6) gestoppt wird,
- wobei die erste und die zweite untere Dichtung (50, 50') seitliche Anteile von größerer Dicke aufweisen, die mit einer gezahnten, oberen Fläche (56, 56') versehen sind, die an der Fläche von zwei angrenzenden Photovoltaikmodulen anschlägt.

2. Tragsystem (1) nach Anspruch 1, **dadurch gekennzeichnet, dass** die Photovoltaikmodule (2) beschichtete Module ohne Rahmen sind.

3. Tragsystem (1) nach Anspruch 1 oder 2, **dadurch gekennzeichnet, dass** die Kanten der Photovoltaikmodule (2) in der Weise voneinander beanstandet sind, dass ein Spalt (12) bleibt, der zum Durchführen der Schraubenmittel (70, 71, 72) zur Befestigung der oberen Leisten an den unteren Profilen geeignet ist.

4. Tragsystem (1) nach einem der vorstehenden Ansprüche, **dadurch gekennzeichnet, dass** die oberen Profile (4, 4') zwei seitliche Sitze (41) umfassen, die im Querschnitt die Form eines umgekehrten "C" aufweisen und zwei obere, streifenförmigen Dichtungen (60) aufnehmen, die unterhalb der unteren Fläche des Profils auskragen.

5. Tragsystem nach Anspruch 4, **dadurch gekennzeichnet, dass** die obere Dichtung (60) einen Streifen (61) umfasst, der eine gezahnte, untere Fläche (63) aufweist, die mit der oberen Fläche des Photovoltaikmoduls (2) in Kontakt tritt, und einen Befestigungsanteil (62), der in den seitlichen Sitz (41) der oberen Leiste einrastet.

6. Tragsystem nach einem der vorstehenden Ansprüche, **dadurch gekennzeichnet, dass** die unteren Dichtungen (50, 50') seitliche Ränder (55, 55') besitzen, die mit dem Untergestell (51, 51') mittels eines dünnen, nach oben oder nach unten gebogenen Materials verbunden sind, um das Wasser zu führen.

7. Tragsystem (1) nach einem der vorstehenden Ansprüche, **dadurch gekennzeichnet, dass** die unteren Profile (3; 103) eine mittlere Rille (32) umfassen, die oben geöffnet ist, um Befestigungen der seitlichen Profile aufzunehmen.

8. Tragsystem (1) nach einem der vorstehenden Ansprüche, **dadurch gekennzeichnet, dass** die unteren Profile (103) eine obere Fläche (33) für die Auflage der Module besitzen, deren Breite geringer als eine Basis (30) für die Auflage der Profile auf dem Dach ist, in der Weise, dass zwei seitliche Kanäle (137) entstehen, die oben geöffnet sind und einen halbzylinderförmigen Boden aufweisen, um die Kabel der Photovoltaikmodule (2) aufzunehmen.

9. Tragsystem (1) nach einem der vorstehenden Ansprüche, **dadurch gekennzeichnet, dass** die unteren Profile (3, 3', 103) zwei seitliche Sitze (138) in Form eines nach oben geöffneten "C" umfassen, um Dichtungen (80) aufzunehmen, die zwischen zwei sich kreuzenden, unteren Profile eingefügt sind.

10. Tragsystem (1) nach einem der vorstehenden Ansprüche, **dadurch gekennzeichnet, dass** die unteren Profile (3, 3', 103) viereckige Längssitze (139a, 139b) und viereckige Querlöcher zur Aufnahme von viereckigen Stangen (201) für die kreuzweise Befestigung der unteren Profile (103) umfassen.

11. Tragsystem (1) nach einem der vorstehenden Ansprüche, **dadurch gekennzeichnet, dass** es Distanzstücke (400) umfasst, die zwischen dem Dach (453) und den unteren Profilen (3) in der Weise angeordnet sind, dass ein Luftspalt (C2) für die Belüftung und natürliche oder forcierte Kühlung der Photovoltaikmodule entsteht.

12. Tragsystem (1) nach Anspruch 11, **dadurch gekennzeichnet, dass** die Photovoltaikmodul-Abdeckung mindestens an einer ihrer seitlichen Kanten einen Blechanschluss (300, 310) besitzt, welcher ein Ende (311) besitzt, das zwischen dem unteren Profil (3) und der oberen Leiste (4) angeordnet ist, wobei der Blechanschluss (300, 310) einen rechteckigen Kanal (C1) definiert, der mit dem Spalt (C2) unterhalb der Module in Verbindung steht, wobei der Blechanschluss (310) mit einem Gitter (313) zum Lufteinlass in den Kanal (C1) und in den Spalt (C2) unter den Modulen zur Belüftung der Photovoltaikmodule versehen ist.

13. Tragsystem (1) nach Anspruch 12, **dadurch gekennzeichnet, dass** es ein Spatzenschutzgitter (600) umfasst, dass rund um die Distanzstücke (400) in der Weise angeordnet ist, dass der Kanal (C1) des Blechanschlusses (300, 310) von dem Spalt (C2) unter den Photovoltaikmodulen getrennt wird, um Tieren den Zugang zu dem Spalt (C2) unter den Photovoltaikmodulen zu verwehren.

## Revendications

1. Système (1) structurel intégré pour le montage de panneaux photovoltaïques, de manière à obtenir une couverture imperméable et étanche, comprenant:
- une pluralité de panneaux photovoltaïques (2) de forme carrée ou rectangulaire ou même irrégulière;
- une pluralité de sections métalliques inférieures (3, 3', 103) disposées entrecroisées entre elles, de manière à générer des cadres de support des bords des panneaux photovoltaïques;
- une pluralité de sections supérieures (4, 4') fixées aux sections métalliques inférieures à l'aide de supports spéciaux et de vis (70, 71, 72);
- un groupe de premiers et seconds joints d'étanchéité (5; 50, 50') disposés entre les sections inférieures et la surface inférieure des panneaux photovoltaïques ; et
- un groupe de joints d'étanchéité supérieurs (6; 60) disposés entre la surface supérieure des panneaux photovoltaïques et la section supérieure;
**caractérisé en ce que**
- lesdites sections supérieures comprennent des sections supérieures longitudinales (4) et des sections supérieures transversales (4') disposées entrecroisées entre elles en correspondance des sections métalliques inférieures (3, 3', 103), où les extrémités des sections supérieures transversales (4') sont espacées par les sections supérieures longitudinales (4), de manière à générer des vides (I1) pour l'écoulement de l'eau,
- ledit premier joint d'étanchéité inférieur (50) comprend une plaque (51) ayant la même largeur de celle de la partie supérieure de la section inférieure (103), qui est identique à la largeur des sections supérieures (4, 4'),
- ledit second joint d'étanchéité inférieur (50') comprend une base (51') ayant la même largeur de celle de la partie supérieure de la section transversale (3'), qui est identique à la largeur des sections supérieures (4, 4'),
- lesdits premiers et seconds joints d'étanchéité (50, 50') étant disposés sur chacune des sections inférieures (3, 3') et sous deux panneaux photovoltaïques adjacents (2), dans la zone proche du bord des panneaux, pour créer des conduits de drainage de l'eau qui ne sont pas stoppés par une barrière desdits joints d'étanchéité supérieurs (6),
- lesdits premiers et seconds joints d'étanchéité inférieurs (50, 50') ayant des portions latérales d'épaisseur majeure dotées d'une surface supérieure dentelée (56, 56') qui va en butée d'arrêt sur la surface inférieure de deux panneaux photovoltaïques adjacents (2).

2. Système (1) selon la revendication 1, **caractérisé en ce que** lesdits panneaux photovoltaïques (2) sont des panneaux stratifiés, sans cadre.

3. Système (1) selon la revendication 1 ou 2, **caractérisé en ce que** les bords desdits panneaux photovoltaïques (2) sont espacés entre eux, de manière à laisser un vide (I2) apte à permettre le passage des dits moyens à vis (70, 71, 72) pour fixer les lamelles supérieures aux sections inférieures.

4. Système (1) selon l'une quelconque des revendications précédentes, **caractérisé en ce que** lesdites sections supérieures (4, 4') comprennent deux logements latéraux (41) ayant une forme en « C » renversé à section croisée, qui logent deux joints d'étanchéité supérieurs (60) en forme de lamelles, qui débordent inférieurement par rapport à la surface inférieure de la section.

5. Système (1) selon la revendication 4, **caractérisé en ce que** ledit joint d'étanchéité supérieur (60) comprend une lamelle (61) ayant une surface inférieure dentelée (63) qui va en contact avec la surface supérieure du dit panneau photovoltaïque (2) et une portion de fixation (62) qui s'engage à encastrement dans ledit logement latéral (41) de la lamelle supérieure.

6. Système (1) selon l'une quelconque des revendications précédentes, **caractérisé en ce que** lesdits joints d'étanchéité inférieurs (50, 50') présentent des bords latéraux (55, 55') reliés à la base (51, 51') moyennant un matériau aminci (57, 57') et repliés vers le haut ou vers le bas, pour la gestion des eaux.

7. Système (1) selon l'une quelconque des revendications précédentes, **caractérisé en ce que** lesdites sections inférieures (3; 103) comprennent une rainure centrale (32) ouverte supérieurement pour accueillir les fixations de sections latérales.

8. Système (1) selon l'une quelconque des revendications précédentes, **caractérisé en ce que** lesdites sections inférieures (103) ont une surface supérieure (33) pour l'appui des panneaux ayant une largeur inférieure par rapport à une base (30) pour l'appui de la section au toit, de manière à générer deux conduits latéraux (137) ouverts supérieurement et ayant un fond de forme demi-cylindrique, pour loger les câbles des panneaux photovoltaïques (2).

9. Système (1) selon l'une quelconque des revendications précédentes, **caractérisé en ce que** lesdites sections inférieures (3, 3', 103) comprennent deux logements latéraux (138) en forme de « C » ouvert vers le haut, pour loger les joints d'étanchéité (80) interposés entre deux sections inférieures qui s'entrecroisent.

10. Système (1) selon l'une quelconque des revendications précédentes, **caractérisé en ce que** lesdites sections inférieures (3, 3', 103) comprennent des logements longitudinaux (139a, 139b) de forme carrée et des orifices transversaux (200) de forme carrée pour loger des barres (201) à section carrée, pour la fixation entrecroisée des sections inférieures (103).

11. Système (1) selon l'une quelconque des revendications précédentes, **caractérisé en ce qu'**il comprend des entretoises (400) disposées entre le toit (453) et les sections inférieures (3), de manière à générer un vide d'air (C2) entre le toit (453) et les panneaux photovoltaïques (2) pour l'aération et le refroidissement, naturel ou forcé, des panneaux photovoltaïques.

12. Système (1) selon la revendication 11, **caractérisé en ce que** ladite couverture de panneaux photovoltaïques présente, sur au moins l'un de ses bords latéraux, un solin (300, 310) métallique, ayant une extrémité (311) disposée entre ladite section inférieure (3) et ladite section supérieure (4), ledit solin (300, 310) définissant un canal rectangulaire (C1) communiquant avec ledit vide (C2) au-dessous des panneaux, ledit solin (310) étant doté d'une grille (313) pour l'admission d'air dans le canal (C1) et dans le vide (C2) sous les panneaux pour l'aération des panneaux photovoltaïques.

13. Système (1) selon la revendication 12, **caractérisé en ce qu'**il comprend un filet anti-oiseaux (600) disposé autour desdites entretoises (400), de manière à séparer ledit canal (C1) du solin (300, 310) du vide (C2) sous les panneaux photovoltaïques, pour éviter l'entrée d'animaux dans le vide (C2) aménagé sous les panneaux photovoltaïques.
